# EUROPÄISCHE PATENTSCHRIFT

(11) **EP 1 141 112 B1**
(45) Veröffentlichungstag und Bekanntmachung des Hinweises auf die Patenterteilung: **21.06.2006**
(21) Anmeldenummer: 99966935.1
(22) Anmeldetag: 09.12.1999
(51) Int. Cl.: C08K 5/103, G11B 7/26

(54) **NEUE POLYMERGEMISCHE MIT ENTFORMUNGSMITTELN**
NOVEL POLYMER BLENDS WITH MOULD-RELEASE AGENTS
MELANGES POLYMERES CONTENANT DES AGENTS DE DEMOULAGE

(30) Priorität: 21.12.1998 DE 19859050
(43) Veröffentlichungstag der Anmeldung: 10.10.2001
(73) Patentinhaber: Bayer MaterialScience AG, 51368 Leverkusen (DE)
(72) Erfinder: REITZE, Burkhard, D-51429 Bergisch Gladbach (DE); ZIMMERMANN, Raimund, D-40764 Langenfeld (DE); HAESE, Wilfried, D-51519 Odenthal (DE)
(86) Internationale Anmeldenummer: PCT/EP1999/009693
(87) Internationale Veröffentlichungsnummer: WO 2000/037550

(56) Entgegenhaltungen:
- US-A- 4 131 575
- US-A- 4 743 641

## Beschreibung

Gegenstand der vorliegenden Erfindung sind thermoplastische Polymergemische enthaltend mindestens ein Entformungsmittel mit einer Polyolkomponente bestehend aus einem Grundkörper mit 4 oder mehr Kohlenstoffatomen, 3 oder mehr Hydroxylgruppen, mehr als einer mit aliphatischen C-C₃₂-Carbonsäuren veresterten Hydroxylgruppe und einer oder mehr als einer freien Hydroxylgruppe, die Verwendung solcher Polyolkomponenten als Entformungsmittel für thermoplastische Polymergemische und Formkörper aus diesen thermoplastischen Polymergemischen.

Bei der Verarbeitung von thermoplastischen Polymergemischen ist die Herstellung von Formteilen mit zum Teil äußerst komplizierter Raumform eine Hauptanwendung. Bei der Verarbeitung werden in die Polymermischung selbst oder in die Maschine Entformungsmittel zugegeben, um die Entnahme der Formteile aus der Form zu gewährleisten oder noch weiter zu vereinfachen. Darüberhinaus soll die Oberflächenqualität verbessert werden.

Nachteil dieser Vorgehensweise ist die Beaufschlagung des Produktes mit Zusatzstoffen, die die Eigenschaften des Formkörpers bei Herstellung, Lagerung oder Gebrauch nachteilig beeinflussen können.

Im Stand der Technik haben sich Ester langkettiger Fettsäuren mit Hydroxykomponenten, besonders Glycerin, bewährt.

Die DE-OS-20 64 095 beschreibt den Zusatz von Fettsäureestern dreiwertiger Alkohole zu Polycarbonaten als Entformungsmittel

DE-OS-25 07 748 beschreibt die Verbesserung des Entformungsverhaltens von Polycarbonaten durch den Zusatz von vollständig mit Fettsäuren veresterten Polyalkoholen.

Die DE-OS 27 01 725 beschreibt den Zusatz von Teilestem spezieller Alkohole zu Polycarbonaten zum Zwecke der Entformung.

JP-A-45-24 439 beschreibt den Zusatz von Teilestem zu Polycarbonaten in Mengen von 0,05 bis 5 % zum Zwecke der Entformung.

JP-A-72-45 934 beschreibt antistatisch ausgerüstete Polycarbonate mit 0,1 bis 5 Gew.-% Fettsäuremonoglyceriden.

JP-A-60-81 245 beschreibt den Zusatz von Teilestern zu chlorarmen Polycarbonaten, um die Korrosion der Werkzeuge zu verhindern.

JP-A-2-225 558 beschreibt Polycarbonatplatten, die Teilester von Polyolen und aliphatischen Monocarbonsäuren enthalten.

Die japanische Patentanmeldung 90-12 510 beschreibt Substrate für CD's, die aus Polycarbonat bestehen und 0,002 bis 5 % Fettsäuremonoglyceride enthalten.

Die japanische Paptentanmeldung 90-294 979 beschreibt Polycarbonate für optische Scheiben, die 0,06 bis 0,09 % Glycerinmonostearat enthalten.

US 4 131 575 beshreibt den Zusatz von Vollestem mehrwertiger Alkohole oder Monoestern mehrwertiger Alkohole zu Polycarbonaten zur Verbesserung der Entformung.

US 4 743 641 beschreibt den Zusatz von Glycerinmonostearat, Diglyceridmonostearat, Glycerinmonopalmitat oder Sorbitanmonostearat zu Polycarbonaten.

EP-A-205 192 beschreit Polycarbonatmischungen, die mit Estern des Glycerins und des Pentaerythrits verseht werden. Bevorzugts ist dabei Glycerinmonosterat.

EP-A-213 413 beschreibt den Zusatz von Teilestern zu Polycarbonaten für optische Zwecke.

EP-A-417 775 beschreibt Formkörper für die Optik aus Polycarbonaten, die Fettsäuremonoglyceride enthalten.

EP-A-511 640 beschreibt ebenfalls den Zusatz von Teilestem zu Polycarbonaten für optische Zwecke.

EP-A-732 360 beschreibt Polycarbonatmischungen mit Gemischen aus Glycerinmonostearat und Glycerintristearat.

Dabei haben die Entformungsmittel des Standes der Technik, wie zum Beispiel das oft verwendete Glycerinmonostearat den Nachteil, daß sie zu Reaktionen mit dem Polycarbonat führen können. Dadurch wird die thermische und oxidative Beständigkeit des Materials verschlechtert, was sich z. B. im Vergilben äußern kann. Dies ist besonders für die optischen Anwendungen des Polycarbonats nicht gewünscht. Dies gilt besonders für Verarbeitungsprozesse, die eine hohe thermische Belastung für das Material darstellen oder für Anwendungen, die besondere optische Qualität erfordern. Auch die mechanischen Eigenschaften des Polymers können durch diese Reaktionen unerwünscht verändert werden. Außerdem kann es zu Belägen auf den Maschinenteilen kommen.

Bei voll veresterten Alkoholkomponenten ist das Entformungsverhalten ungenügend.

Es besteht daher der stetige Bedarf an neuen Entformungsmitteln für thermoplastische Polymere, wie z. B. Polycarbonat und/oder Polycarbonat-Blends.

Die Aufgabe bestand daher darin, ein Entformungsmittel für Polycarbonate zu entwickeln, das unter Herstellungs- und Verarbeitungsbedingungen besonders bei der Herstellung von Produkten für optische Anwendungen, wie Compact Discs und Digital Versatile Disks (DVDs), wenig oder gar nicht zur Reaktion neigt, eine gute Entformungswirkung hat, und so zu einer verbesserten Qualität und einer größeren Datensicherheit bei optischen Anwendungen führt. Durch die erfindungsgemäßen Polymergemische wird dies erreicht.

Gegenstand der vorliegenden Anmeldung sind demnach thermoplastische Polymergemische enthaltend mindestens ein Polycarbonat und mindestens ein Entformungsmittel mit mindestens einer Polyolkomponente wobei mindestens eine Polyolkomponente (I) aus einem Grundkörper mit 4 oder mehr Kohlenstoffatomen, 3 oder mehr, bevorzugt 4 oder mehr Hydroxylgruppen, besteht, dadurch gekennzeichnet, dass in der Polyolkomponente (I) die Zahl der mit aliphatischen Carbonsäuren veresterten und der freien Hydroxyl gruppen gleich ist.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststofr-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimetliyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 4,4'-(m-Phenylendiisopropyliden)diphenol.

Besonders bevorzugte Diphenole sind 2,2-Bis-(4-hydroxyphenyl)-propan (BPA), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 4,4'-(m-Phenylendiisopropyliden) bisphenol (CAS-No. 13595-25-0) (BPM), 1,1-Bis-(4-hydroxyphenyl)-cyclohexan und 1,1-Bis-(4-hydroxyphenyl)-3,3,5-trimethylcyclohexan (TMC).

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Bevorzugt werden Polymergemische verwendet, die mindestens ein Polycarbonat mit Diolbausteinen aus Bisphenol A und/oder Trimethylcyclohexyl-bisphenol (TMC) enthalten, bevorzugt ausgewählt aus der Gruppe der Homopolymere des Bisphenols A, der Copolymere des Bisphenol A mit TMC oder der Copolymere mit 5 bis 50 Gew.-% TMC.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol Amylphenol und 2,4,6-Tribromphenol sowie deren Mischungen.

Bevorzugte Kettenabbrecher sind Phenol und/oder p-tert.-Butylphenol und/oder p-Cumylphenol.

Geeignete Monocarbonsäuren sind Benzoesäure, Alkylbenzoesäuren und Halogenbenzoesäuren.

Bevorzugte Kettenabbrecher sind die Phenole der Formel (I) 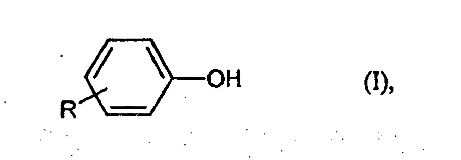 worin R Wasserstoff, tert.-Butyl oder ein verzweigter oder unverzweigter C₈- und/oder C₉-Alkylrest ist. Aber auch p-Cumylphenol kann bevorzugt verwendet werden.

Die Menge an einzusetzendem Kettenabbrecher, bevorzugt im Phasengrenzflächenverfahren, beträgt 0,1 Mol-% bis 5.Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und für einige Anwendungen sogar bevorzugt 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können im Phasengrenzflächenverfahren entweder mit den Diphenolen und den Kettenabbrechern in der wäßrig alkalischen Phase vorgelegt werden, oder in einem ganischen Lösungsmittel gelöst zugegeben werden. Im Falle des Umesterungsverfahrens können die Verzweiger zusammen mit den Diphenolen eingesetzt werden.

Alle diese Maßnahmen zur Herstellung der thermoplastischen Polycarbonate sind dem Fachmann geläufig.

Erfindungsgemäße einsetzbare Polyolkomponenten sind solche mit 4 bis 12 Kohlenstoffatomen, bevorzugt 4 bis 8 Kohlenstoffatomen, besonders bevorzugt 5, 6 oder 7 Kohlenstoffatomen, ganz besonders bevorzugt 5 oder 6 Kohlenstoffatomen und äußerst bevorzugt 5 Kohlenstoffatomen.

Bevorzugt sind Polyolkomponenten (I) der folgenden allgemeinen Formeln: 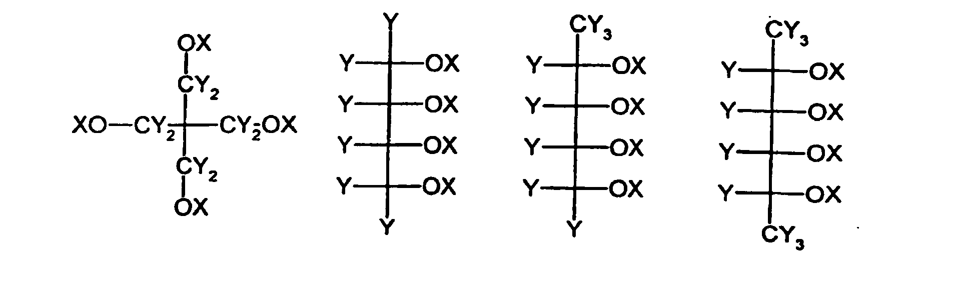 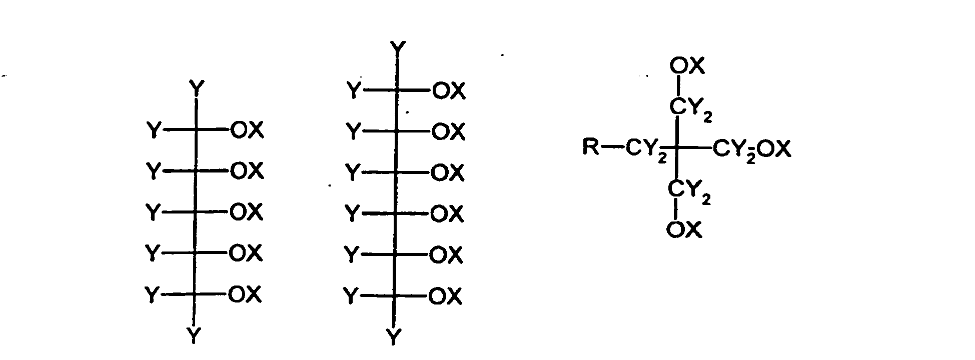 worin die Substituenten X unabhängig voneinander Wasserstoff oder aliphatische Acylreste sind, mit der Maßgabe, daß mehr als ein X Acylrest und mehr als ein X Wasserstoff ist un R Wasserstoff, oder linear oder verzweigtes C₁ bis C₁₀-Alkyl sein kann, bevorzugt Methyl, Ethyl oder Propyl und der Maßgabe, daß die Zahl der veresterten und freien Hydroxylgruppengleich ist

Die Reste Y sind unabhängig voneinander Wasserstoff, Alkyl- oder Arytreste, wobei Wasserstoff, Methyl, Ethyl-, Propyl-, Butyl- und Phenylreste bevorzugt sind. Besonders bevorzugt sind Wasserstoff und Methyl. Ganz besonders bevorzugt ist, wenn unmittelbar benachbart zu einem Kohlenstoff mit Hydroxylgruppe kein Kohlenstoff mit einem Wasserstoffsubstituenten befindlich ist

Bevorzugte Acylreste X sind Fettsäureesterreste mit 2 bis 30 C-Atomen, besonders bevorzugt sind C₅-C₂₅-Fettsäuren, ganz besonders bevorzugt C₈-C₂₄-Fettsäuren und äußerst bevorzugt C₁₂-C₂₂-Fettsäuren und deren Gemischen. Der Fachmann findet die besten Beispiele bei C₁₆-C₂₀-Fettsäuren und ganz besonders bei C₁₆-C₁₈-Fettsäuren und deren Gemischen.

Beispiele für solche Acylreste sind Reste der Essigsäure, der Propionsäure und der Buttersäure, sowie Reste der Myristinsäure, der Palmitinsäure oder Stearinsäure, der Arachinsäure und der Behensäure und deren Gemische, bevorzugt Gemische der Stearinsäure und der Palmitinsäure.

Bevorzugte Polyolkomponenten sind Diesterderivate des Pentaerythrits, besonders Diester des Pentaerytriths mit der Stearinsäure.

Die Polyolkomponente (I) kann in Mengen von 0,005 Gew.-% bis 0,5 Gew.-%, bevorzugt 0,01 Gew.-% bis 0,2 Gew.-%, ganz besonders bevorzugt 0,015 Gew.-% bis 0,1 Gew.-% und äußerst bevorzugt 0,02 Gew.-% bis 0,08 Gew.-% eingesetzt werden.

Die Polyolkomponente kann sowohl allein als auch im Gemisch von zwei oder mehr Polyolkomponenten und/oder anderen Komponenten eingesetzt werden. Bevorzugt ist das Verhältnis der Menge der Polyolkomponente (I) im Entformungsmittel zu anderen optional vorhandenen Komponenten im Entformungsmittel größer als 1:1.

Der Fachmann erhält gute Ergebnisse, wenn der Anteil von Polyolkomponenten mit weniger als einer freien Hydroxylgruppen oder Polyolkomponenten mit weniger als zwei veresterten Hydroxylgruppen im gesamten Entformungsmittel jeweils unterhalb 24 Gew.-%, bevorzugt unterhalb 20 Gew.-% besonders bevorzugt unterhalb 15 Gew.-% und äußerst bevorzugt unterhalb von 10 Gew.-% liegt.

Den erfindungsgemäß zu entformenden thermoplastischen Polycarbonaten können noch für Polycarbonate übliche Zusätze in den bekannten Mengen zugesetzt sein, beispielsweise Stabilisatoren gegen Wärme, Feuchtigkeit und UV-Strahlung, wie Phosphorverbindungen (wie Phosphorsäure. Phosphatester, Phosphite, Phosphonite, u. a.), gegebenenfalls in Kombination mit monomeren oder polymeren Epoxiden, N-haltige Heterocyclen wie Triazole bzw. Benztriazole, außerdem Flammschutzmittel wie aliphatische oder aromatische oder perfluorierte aliphatische Alkali- oder Erdalkalisulfonate, Farbstoffe, Füllstoffe, Schaummittel und Antistatika. Bei optischen Anwendungen werden bevorzugt solche Komponenten genommen, die die Transparenz des Materials nicht verschlechtern.

Der Zusatz der Polyolkomponente zu den thermoplastischen Polycarbonaten kann beispielsweise erfolgen, indem man die Polyolkomponente während der Aufarbeitung der Polymerlösung der thermoplastischen Polycarbonate oder der Schmelze der thermoplastischen Polycarbonate zusetzt; vorzugsweise erfolgt der Zusatz über die Compoundierung des fertigen, thermoplastischen Polycarbonats.

Die üblichen, für Polycarbonate bekannten Zusätze können in bekannter Weise entweder vor dem Zusatz der Polyolkomponente mit dem Zusatz der Polyolkomponente oder nach dem Zusatz der Polyolkomponente den Polycarbonaten zugemischt werden.

Ein weiterer Gegenstand der Erfindung ist die Verwendung von Polyolkomponenten (I) als Entformungsmittel für thermoplastische Polymergemische enthaltend mindestens ein Polycarbonat.

Ein weiterer Gegenstand der Erfindung sind Formkörper aus den genannten thermoplastischen Polymergemischen bevorzugt für optische Anwendungen, besonders bevorzugt für optische Datenträger, ganz besonders bevorzugt Compact Discs und DVD's.

Die erfindungsgemäßen leicht entformbaren Polycarbonate können in der für Polycarbonate bekannten Weise zu optische Anwendungen, besonders bevorzugt für optische Datenträger, ganz besonders bevorzugt Compact Discs und DVD's weiterverarbeitet werden.

Diese Verarbeitung kann als separater Schritt aus den fertig hergestellten, leicht entformbaren Polycarbonaten, die beispielsweise als Granulat anfallen, erfolgen. Die Verarbeitung kann aber auch im Zuge der Einarbeitung der Polyolkomponente und/oder der üblichen Zusätze erfolgen.

### Beispiele:

### Folgende Mischung wurde hergestellt:

### Beispiel 1:

99,96 Gew. % Polycarbonatgranulat aus Bisphenol-A-PC mit tert.-Butylphenol-Endgruppen und einer mittleren Lösungsviskosität von1,20 (gemessen in Methylenchlorid bei 25°C und einer Konzentrationvon 0,5 g in 100 ml Methylenchlorid)
0,04 Gew. % Loxiol EP 728 (Pentaerythrit-Fettsäurediester), Henkel KGaA
und in einem geschlossenen Behälter intensiv durchmischt. Anschließend wurde die Mischung auf einem Zwei-Schnecken-Kneter des Typs Werner Pfleiderer ZSK 53 bei einer Massetemperatur von ca. 240°C compoundiert.

### Vergleichsbeispiel 1 (ohne Entformungsmittel):

Polycarbonatgranulat aus Bisphenol-A-PC mit tert.-Butylphenol-Endgruppen und einer mittleren Lösungsviskosität von 1,20 (gemessen in Methylenchlorid bei 25°C und einer Konzentration von 0,5 g in 100 ml Methylenchlorid) wird auf einem Zwei-Schnecken-Kneter des Typs Werner Pfleiderer ZSK 53 bei einer Massetemperatur von ca. 240°C extrudiert.

### Vergleichsbeispiel 2 (mit Glycerinmonostearat):

### Folgende Mischung wurde hergesteille

99,96 Gew. % Polycarbonatgranulat aus Bisphenol-A-PC mit tert.-Butylphenol-Endgruppen und einer mittleren Lösungsviskosität von1,20 (gemessen in Methylenchlorid bei 25°C und einer Konzentrationvon 0,5 g in 100 ml Methylenchlorid)
0,04 Gew. % Loxiol EP 129 (Glycerinmonostearat), Henkel KGaA
und in einem geschlossenen Behälter intensiv durchmischt. Anschließend wurde die Mischung auf einem Zwei-Schnecken-Kneter des Typs Werner Pfleiderer ZSK 53 bei einer Massetemperatur von ca. 240°C compoundiert.

### Vergleichsbeispiel 3 (mit Pentaerythritstearat):

### Folgende Mischung wurde hergestellt:

99,96 Gew. % Polycarbonatgranulat aus Bisphenol-A-PC mit tert.-Butylphenol-Endgruppen und einer mittleren Lösungsviskosität von1,20 (gemessen in Methylenchlorid bei 25°C und einer Konzentrationvon 0,5 g in 100 ml Methylenchlorid)
0,04 Gew. % Loxiol P 861/3.5 (Pentaerythrittetraester), Henkel KGaA
und in einem geschlossenen Behälter intensiv durchmischt. Anschließend wurde die Mischung auf einem Zwei-Schnecken-Kneter des Typs Werner Pfleiderer ZSK 53 bei einer Massetemperatur von ca. 240°C compoundiert.

### Messung der Haftreibung:

Die Haftreibung ist die Reibzahl, die aus der notwendigen Kraft abgeleitet wird, um relativ zueinander ruhende Körper (Stempel / Prüfkörper) in Bewegung zu setzen (Schwellenwert).

### Der Haftreibungskoeffizient ist wie folgt definiert:

F_{R} = µ* F_{N}(Gl.1)
nach µ umgestellt:µ = F_{R}/ F_{N}(GI. 2)
F_{N} = Normalkraft, F_{R} = Reibkraft, µ = Reibungskoeffizient

Bei Kreisbewegung gilt folgender Zusammenhang:F_{R} = M_{d} /rₘ(Gl.3)M_{d} = Drehmoment, rₘ= mittlerer Radius der Reibfläche (Ringfläche)
M_{d}/rₘ = µ* F_{N}(Gl. 4)
nach µ umgestellt:µ = M_{d} / (rₘ * F_{N})(Gl.5)

In einem speziellen Reibungskoeffizientenwerkzeug wird ein scheibenförmiger Probekörper mit einem Außendurchmesser von 92mm und einer Dicke von 2,6 mm hergestellt. Dieser besitzt am äußerem Rand einen 5mm hohen und 3 mm breiten Steg, an dem sich flache Vertiefungen, vergleichbar zu einer Zahnriemenscheibe befinden, wodurch das Drehmoment vom Werkzeug auf den Prüfkörper übertragen wird.

Es erlaubt die direkte Ermittlung des Haftreibungskoeffizienten (Gl. 5) an einem scheibenförmigen Prüfkörper, unmittelbar nach dessen Erstarrung. Hierbei gilt die Beziehung, daß die Reibkraft proportional dem Drehmoment ist (Gl. 3). Beim Öffnen des Werkzeugs fährt ein mit einem Drehmomentaufnehmer verbundener Stempel mit einer definierten Normalkraft F_{N} gegen das Formteil (Reibpartner). Auf der anderen Formteilseite wird der Prüfkörper gehalten und in Rotation versetzt. Dabei wird mittels des am Stempel gemessenen Drehmoments der Haftreibungskoeffizient zwischen Stempel und Prüfkörper ermittelt. Da die Reibung durch die Unebenheit der aufeinandergleitenden Flächen verursacht wird (verhaken), wurde der Stempel mit einer mittleren Oberflächenrauhigkeit Ra = 0,05µm ausgeführt.

Die Materialien (Material 1 sowie Vergleichsmaterial 1, Vergleichsmaterial 2 und Vergleichsmaterial 3) wurden auf einer Spritzgießmaschine aufgeschmolzen und bei einer Schmelzetemperatur von 300°C in das geschlossene Reibungskoeffizientenwerkzeug mit einer Werkzeugwandtemperatur von 100°C eingespritzt und unter Nachdruck mit 550bar 15sec lang gehalten.

Nach einer Restkühlzeit von 20 sec wird das Werkzeug geringfügig geöffnet und der Reibungskoeffizient bestimmt.

### Folgende Werte wurden erhalten:

| **Material** | **Haftreibungskoeffizient µ**_{**0**} |
|---|---|
| Material 1 | 0,82 |
| Vergleichsmaterial 1 | 1,07 |
| Vergleichsmaterial 2 | 0,72 |
| Vergleichsmaterial 3 | 1,04 |

Es zeigt sich, daß bei einer geringen Entformungsmittelkonzentration nur das erfindungsgemäße Produkt und das Vergleichsprodukt mit Glycerinmonostearat als Entformungsmittel die Haftreibung deutlich absenken.

### Messung der Produktstabilität bei der Herstellung von CDs:

Zur Messung der Produktstabilität wurden auf einer CD- Spritzgießmaschine des Typs Netstal Discjet 600 CD-Rohlinge aus dem oben beschriebenen Material 1 und dem Vergleichsmaterial 2 hergestellt, die eine Dicke von 1,2mm und einen Außendurchmesser von 120 mm aufweisen. Um bei der farbmetrischen Messung Lichtstreuung und -beugung zu vermeiden, wurde eine blanke Matrize ohne Pitstruktur verwendet.

Die Verarbeitung der Materialien erfolgte bei unterschiedlichen Maschineneinstellungen:
- Einstellung 1:: Zylindertemperaturen (Einzug/Kompression/Zylinderkopf/Düse) 315 / 320 / 320 / 320 °C maximale Einspritzgeschwindigkeit: 130 mm/sec Werkzeug (Vorlauftemperatur): 55 °CZykluszeit: 4,6 sec
- Einstellung 2:: Zylindertemperaturen (Einzug/Kompression/Zylinderkopf/Düse) 315 /340 /350 /350 °Cmaximale Einspritzgeschwindigkeit: 110 mm/sec Werkzeug (Vorlauftemperatur): 55 °CZykluszeit: 4,9 sec
- Einstellung 3:: Zylindertemperaturen (Einzug/Kompression/Zylinderkopf/Düse)315 / 360 / 380 / 380 °Cmaximale Einspritzgeschwindigkeit: 100 mm/secWerkzeug (Vorlauftemperatur): 55 °CZykluszeit: 5,5 sec
- Einstellung 4:: entsprechend Einstellung 2, wobei jedoch der Zyklus durch einen 5-minütigen Maschinenstopp unterbrochen wird. Die jeweils fünfte Platte nach Wiederanfahren der Spritzgießmaschine wurde für die nachfolgenden Messungen genommen.

An den CD-Rohlingen wurden die Schmelzeviskosität, der Yellownessindex, der Gehalt an phenolischen OH-Gruppen und der Gehalt an freiem tert.-Butylphenol gemessen. Es wurden folgende Werte erhalten:

**Tabelle 1**

| Schmelzeviskosität in Pa*s (300°C /1000 s⁻¹) | | | | |
|---|---|---|---|---|
| Probe | Einst. 1 (320°C) | Einst. 2 (350°C) | Einst. 3 (380°C) | Einst. 4 (350°C + Stopp) |
| Material 1 | 66 | 66 | 65 | 65 |
| Vergleichsmaterial 2 | 63 | 63 | 63 | 61 |

**Tabelle 2**

| Yellownessindex YI nach ASTM E 313 | | | | |
|---|---|---|---|---|
| Probe | Einst. 1 (320°C) | Einst. 2 (350°C) | Einst. 3 (380°C) | Einst. 4 (350°C + Stopp) |
| Material 1 | 1,02 | 1,02 | 1,02 | 1,38 |
| Vergleichsmaterial 2 | 1,10 | 1,16 | 1,18 | 1,48 |

**Tabelle 3**

| phenolisches OH in ppm | | | | |
|---|---|---|---|---|
| Probe | Einst.1 (320°C) | Einst. 2 (350°C) | Einst.3 (380°C) | Einst.4 (350°C + Stopp) |
| Material 1 | 110 | 115 | 125 | 130 |
| Vergleichsmaterial 2 | 120 | 130 | 135 | 145 |

**Tabelle 4**

| freies p-tert.-Butylphenol in ppm | | | | |
|---|---|---|---|---|
| Probe | Einst. 1 (320°C) | Einst. 2 (350°C) | Einst. 3 (380°C) | Einst. 4 (350°C + Stopp) |
| Material 1 | 6 6 | | 8 | 11 |
| Vergleichsmaterial 2 | 9 | 11 | 19 | 20 |

### Beschreibung der Meßmethoden im einzelnen:

a) Schmelzeviskositätsmessung im Hochdruck-Kapillar-Viskosimeter Die CD-Rohlinge werden in 6 bis 8 mm dünne Streifen geschnitten und bei 110°C im Vacuum über 16h getrocknet. Anschließend werden die Streifen in einen auf 300°C aufgeheizten Prüfkanal (Durchmesser: 10mm) gestopft, aufgeschmolzen und mit einem Stempel durch eine Düse mit einem Durchmesser von 1mm und einer Länge von 20mm mit einer Schergeschwindigkeit von 1000 s⁻¹ gedrückt.
b) Yellownessindex YI nach ASTM E 313
   Die Messung erfolgt senkrecht zur CD-Oberfläche auf einem Radius von 40mm
c) phenolisches OH
   Das Polycarbonat wird in Dichlormethan gelöst und mit Titan (IV)-chlorid unter Bildung eines orange-rot gefärbten Komplexes versetzt, dessen Extinktion bei 546 nm photometrisch bestimmt wird. Die Kalibrierung erfolgt mit Bisphenol A als exterem Standard. Die Bestimmungsgrenze liegt bei ca. 20 ppm OH.
d) freies p-tert. Butylphenol
   10g Polycarbonat werden in Methylenchlorid aufgelöst und mit Aceton und Methanol gefällt. Das ausgefällte Polymer wird abfiltriert und die Restlösung auf ca. 20 ml eingeengt. Anschließend wird die Lösung in einem Hochdruck-Flüssigkeits-Chromatographen analysiert.
   Chromatographische Bedingungen: Reverse phase: C18, Fließmittel: Wasser/Acetonitril (50%), Flow: 1 ml/min Wellenlänge: 220nm

Die Prüfergebnisse zeigen in allen gemessenen Eigenschaften Vorteile für das erfindungsgemäße Material.

## Patentansprüche

1. Thermoplastische Polymergemische, enthaltend mindestens ein Polycarbonat und mindestens ein Entformungsmittel mit mindestens einer Polyolkomponente **dadurch gekennzeichnet, dass** in der Polyolkomponente (I) aus einem Grundkörper mit 4 oder mehr Kohlenstoffatomen, und 3 oder mehr Hydroxylgruppen die Zahl der veresterten und der freien Hydroxylgruppen gleich ist mit aliphatischen Carbonsäuren.

2. Thermoplastische Polymergemische nach Anspruch 1 **dadurch gekennzeichnet, daß** der Grundkörper 4 bis 12 Kohlenstoffatome aufweist, bevorzugt 4 bis 8 Kohlenstoffatome, besonders bevorzugt 5, 6 oder 7 Kohlenstoffatome, ganz besonders bevorzugt 5 oder 6 Kohlenstoffatome und äußerst bevorzugt 5 Kohlenstoffatome.

3. Thermoplastische Polymergemische nach mindestens einem der vorgehenden Ansprüche **dadurch gekennzeichnet, daß** die aliphatischen Carbonsäuren C₂₋C₃₀-Fettsäuren, bevorzugt C₅-C₂₅-Fettsäuren, bevorzugt C₈-C₂₄-Fettsäuren, besonders bevorzugt C₁₂-C₂₂-Fettsäuren und ganz besonders bevorzugt C₁₆₋C₂₀-Fettsäuren und äußerst bevorzugt C₁₆-C₁₈-Fettsäuren oder Gemische dieser Fettsäuren sind.

4. Thermoplastische Polymergemische nach mindestens einem der vorgehenden Ansprüche **dadurch gekennzeichnet, daß** die Polyolkomponente (I) in Mengen von 0,005 Gew.-% bis 0,5 Gew.-%, bevorzugt 0,01 Gew.-% bis 0,2 Gew.-%. ganz besonders bevorzugt 0,015 Gew.-% bis 0,1 Gew.-% und äußerst bevorzugt 0,02 Gew.-% bis 0,08 Gew.-% eingesetzt werden.

5. Thermoplastische Polymergemische nach mindestens einem der vorgehenden Ansprüche **dadurch gekennzeichnet, daß** in der Polyolkomponente (I) unmittelbar benachbart zu einem Kohlenstoff mit Hydroxylgruppe kein Kohlenstoff mit einem Wasserstoffubstituenten befindlich ist.

6. Thermoplastische Polymergemische nach mindestens einem der vorgehenden Ansprüche **dadurch gekennzeichnet, daß** das Verhältnis der Menge der Polyolkomponente (I) im Entformungsmittel zu anderen optional vorhandenen Komponenten im Entformungsmittel größer als 1:1 ist.

7. Thermoplastische Polymergemische nach mindestens einem der vorgehenden Ansprüche **dadurch gekennzeichnet, daß** zusätzlich noch andere in Polycarbonatmischungen übliche Inhaltsstoffe und/oder Additive, wie z. B. bevorzugt Stabilisatoren, Flammschutzmittel, Antistatika, Füllmitteln, Schaummitteln, Farbstoffe o.ä. enthalten sind.

8. Thermoplastische Polymergemische nach mindestens einem der vorgehenden Ansprüche **dadurch gekennzeichnet, daß** mindestens ein Polycarbonat enthalten ist, das als Diolbaustein Bisphenol A und/oder Trimethylcyclohexyl-bisphenol (TMC) enthält, bevorzugt ausgewählt ist aus der Gruppe der Homopolymere des Bisphenols A, der Copolymere des Bisphenol A mit TMC oder der Copolymere mit 5 bis 50 Gew.-% TMC.

9. Verwendung von Polyolkomponenten (I) aus mindestens einem der Ansprüche 1 bis 5 als Entformungsmittel für thermoplastische Polymergemische enthaltend mindestens ein Polycarbonat.

10. Formkörper aus thermoplastischen Polymergemischen nach mindestens einem der Ansprüche 1 bis 8.

11. Optische Datenträger, erhältlich aus thermoplastischen Polymergemischen nach mindestens einem der Ansprüche 1 bis 8.

## Claims

1. Thermoplastic polymer mixtures containing at least one polycarbonate and at least one mould release agent with at least one polyol component, **characterised in that** in the polyol component (I) made from a parent substance with 4 or more carbon atoms, 3 or more hydroxyl groups the number of hydroxyl groups esterified with aliphatic carboxylic acids and of free hydroxyl groups is the same.

2. Thermoplastic polymer mixtures according to Claim 1, **characterised in that** the parent substance contains 4 to 12 carbon atoms, preferably 4 to 8 carbon atoms, particularly preferably 5, 6 or 7 carbon atoms, very particularly preferably 5 or 6 carbon atoms and even more preferably 5 carbon atoms.

3. Thermoplastic polymer mixtures according to at least one of the preceding Claims, **characterised in that** the aliphatic carboxylic acids are C₂-C₃₀ fatty acids, preferably C₅-C₂₅ fatty acids, preferably C₈-C₂₄ fatty acids, particularly preferably C₁₂-C₂₂ fatty acids, very particularly preferably C₁₆-C₂₀ fatty acids and even more preferably C₁₆-C₁₈ fatty acids or mixtures of these fatty acids.

4. Thermoplastic polymer mixtures according to at least one of the preceding Claims, **characterised in that** polyol component (I) is used in amounts of 0.005 wt.% to 0.5 wt.%, preferably 0.01 wt.% to 0.2.wt.%, very particularly preferably 0.015 wt % to 0.1 wt.%, and even more preferably 0.02 wt.% to 0.08 wt.%.

5. Thermoplastic polymer mixtures according to at least one of the preceding Claims, **characterised in that**, in polyol component (I), a carbon atom with a hydrogen substituent is not located immediately adjacent to a carbon atom with hydroxyl groups.

6. Thermoplastic polymer mixtures according to at least one of the preceding Claims, **characterised in that** the ratio of the amount of polyol component (I) in the mould release agent to other optionally present components in the mould release agent is greater than 1:1.

7. Thermoplastic polymer mixtures according to at least one of the preceding Claims, **characterised in that** in addition other ingredients and/or additives conventionally used in polycarbonate mixtures such as e.g. preferably stabilisers, flame retardants, antistatic agents, fillers, foaming agents, colorants, etc. are present.

8. Thermoplastic polymer mixtures according to at least one of the preceding Claims, **characterised in that** at least one polycarbonate is present which contains bisphenol A and/or trimethylcyclohexyl bisphenol (TMC) as diol blocks, preferably being chosen from the group of homopolymers of bisphenol A, copolymers of bisphenol A with TMC or copolymers with 5 to 50 wt.% of TMC.

9. Use of polyol components (I) from at least one of Claims 1 to 5 as mould release agents for thermoplastic polymer mixtures containing at least one polycarbonate.

10. Moulded items made from thermoplastic polymer mixtures according to at least one of Claims 1 to 8.

11. Optical data carriers obtainable from thermoplastic polymer mixtures according to at least one of Claims 1 to 8.

## Revendications

1. Mélanges polymères thermoplastiques contenant au moins un polycarbonate et au moins un agent de démoulage avec au moins un composant polyol, **caractérisés en ce** dans le composant polyol (I) constitué d'un corps de base comportant 4 ou plus de 4 atomes de carbone, 3 ou plus de 3 groupes hydroxyle le nombre des groupes hydroxyle estérifiés avec des acides carboxyliques aliphatiques et des groupes hydroxyle libres est identique.

2. Mélanges polymères thermoplastiques selon la revendication 1, **caractérisés en ce que** le corps de base comporte 4 à 12 atomes de carbone, de préférence 4 à 8 atomes de carbone, avec une préférence particulière 5, 6 ou 7 atomes de carbone, avec une préférence toute particulière 5 ou 6 atomes de carbone et avec une préférence extrême 5 atomes de carbone.

3. Mélanges polymères thermoplastiques selon au moins une des revendications précédentes, **caractérisés en ce que** les acides carboxyliques aliphatiques sont des acides gras en C₂-C₃₀, de préférence des acides gras en C₅ C₂₅, de préférence des acides gras en C₈-C₂₄, avec une préférence particulière, des acides gras en C₁₂-C₂₂, avec une préférence toute particulière des acides gras en C₁₆-C₂₀ et avec une préférence extrême des acides gras en C₁₆-C₁₈ ou des mélanges de ceux-ci.

4. Mélanges polymères thermoplastiques selon au moins une des revendications précédentes, **caractérisés en ce que** les composants polyol (I) sont mis en oeuvre en proportions de 0,005 à 0,5 % en poids, de préférence de 0,01 à 0,2 % en poids, avec une préférence toute particulière de 0,015 à 0,1 % en poids et avec une préférence extrême de 0,02 à 0,08 % en poids.

5. Mélanges polymères thermoplastiques selon au moins une des revendications précédentes, **caractérisés en ce que** dans les composants polyol (I), il ne se trouve pas de carbone avec un substituant de l'hydrogène a proximité immédiate d'un carbone comportant un groupe hydroxyle.

6. Mélanges polymères thermoplastiques selon au moins une des revendications précédentes, **caractérisés en ce que** le rapport des proportions entre le composant polyol (I) dans l'agent de démoulage et les autres composants facultativement présents dans l'agent de démoulage est supérieur à 1:1.

7. Mélanges polymères thermoplastiques selon au moins une des revendications précédentes, **caractérisés en ce qu'**ils contiennent en plus d'autres constituants et/ou additifs usuels dans les mélanges de polycarbonates tels que, de préférence, des stabilisants, des agents pare-flamme, des agents antistatiques, des charges, des agents moussants et des colorants, etc.

8. Mélanges polymères thermoplastiques selon au moins une des revendications précédentes, **caractérisés en ce qu'**ils contiennent au moins un polycarbonate qui contient comme élément diol, du bisphénol A et/ou du triméthylcyclohexyl-bisphénol (TMC), sélectionnés de préférence parmi le groupe des homopolymères du bisphénol A, des copolymères de bisphénol A avec du TMC ou des copolymères avec 5 à 50 % en poids de TMC.

9. Utilisation des composants polyol (1) selon au moins une des revendications 1 à 5 comme agent de démoulage pour des mélanges polymères thermoplastiques contenant au moins un polycarbonate.

10. Pièces moulées à base de mélanges polymères thermoplastiques selon au moins une des revendications 1 à 8.

11. Supports de données optiques pouvant être obtenus à partir de mélanges polymères thermoplastiques selon au moins une des revendications 1 à 8.
